# EUROPÄISCHE PATENTANMELDUNG

(11) **EP 0 577 988 A1**
(43) Veröffentlichungstag der Anmeldung: **12.01.1994**
(21) Anmeldenummer: 93109155.7
(22) Anmeldetag: 08.06.1993
(51) Int. Cl.: B60R 21/32

(54) **Elektronisches Gerät für die Ansteuerung eines Sicherheitssystems**

(30) Priorität: 06.07.1992 DE 9209034 U
(71) Anmelder: ROBERT BOSCH GMBH, 70442 Stuttgart (DE)
(72) Erfinder: Mattes, Bernhard, Dipl.-Ing., W-7123 Sachsenheim 1 (DE); Schumacher, Hartmut, Dipl.-Ing., W-7149 Freiberg (DE); Crispin, Norbert, Dipl.-Ing., W-7145 Markgröningen (DE); Henne, Ralf, W-7123 Sachsenheim 1 (DE)

(57) **Zusammenfassung**

Ein elektronisches Gerät (1) für die Ansteuerung eines Sicherheitssystems (18) für Fahrzeuginsassen umfaßt eine Serienschaltung einer Zündpille (ZP) mit einem Kondensator (C1). Das Gerät (1) verfügt über eine Lade- und Entladeeinrichtung für den Kondensator (C1) und eine Meßeinrichtung für die Messung an der Zündpille (ZP) anliegenden Spannung.

## Beschreibung

### Stand der Technik

Aus WO 90/02062 ist eine elektronische Einrichtung zum Ansteuern von Sicherungsmitteln bekannt, die ein Zündelement umfaßt, das in Serienschaltung mit einer Kapazität verbunden ist.

### Vorteile der Erfindung

Das elektronische Gerät mit den kennzeichnenden Merkmalen des Anspruchs 1 bietet den Vorteil einer besonders einfachen und leichten Überprüfbarkeit einer derartigen Serienschaltung von Zündelement und Kapazität.

### Zeichnung

Ausführungsbeispiele der Erfindung sind in der Zeichnung dargestellt und in der nachfolgenden Beschreibung näher erläutert. Es zeigen Figur 1 einen schematischen Stromlaufplan des elektronischen Gerätes, Figur 2 und Figur 3 Teildarstellungen des Stromlaufplans anderer Ausführungsbeispiele des elektronischen Geräts, Figur 4 in einem Diagramm einen Spannungsverlauf als Funktion der Zeit, und Figur 5 in einem weiteren Diagramm ebenfalls einen Spannungsverlauf als Funktion der Zeit.

### Beschreibung der Ausführungsbeispiele

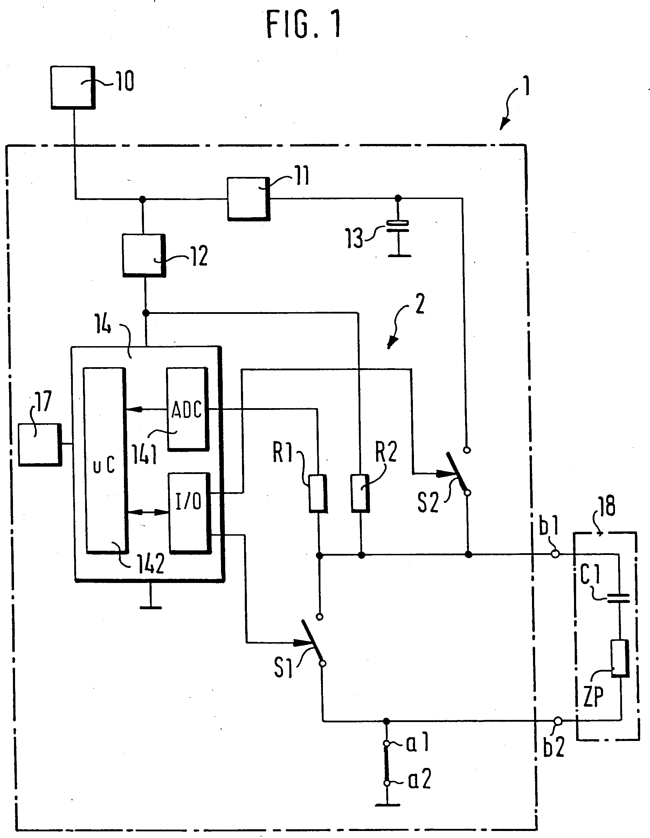

Das elektronische Gerät ist in Figur 1 mit 1 bezeichnet. Es dient der Ansteuerung eines Sicherheitssystems 18 für Fahrzeuginsassen, das beispielsweise mindestens einen aufblasbaren Airbag und/oder mindestens einen Gurtstraffer umfaßt. Dazu ist das elektronische Gerät 1 über Ausgangsleitungen b1, b2 mit mindestens einer Serienschaltung je einer Kapazität C1 und einer Zündpille ZP verbunden, die in Wirkverbindung mit dem Sicherheitssytem stehen. Unter Wirkverbindung soll im Sinne der Anmeldung verstanden werden, daß durch die vermittels Stromdurchgang erhitzte und aktivierte Zündpille ZP eine gaserzeugende Treibladung aktivierbar ist, die den in dem Sicherheitssystem vorhandenen Airbag aufbläst. Die Ansteuerung des Sicherheitssystems 18 erfolgt in Abhängigkeit von dem Ausgangssignal eines Beschleunigungssensors 17, dessen Ausgangsleitung mit einem Eingangsanschluß einer Recheneinrichtung 14 für die Bewertung der Ausgangssignale des Beschleunigungssensors 17 verbunden ist. Das elektronische Gerät 1 wird von der Batterie 10 des Fahrzeugs mit Energie versorgt. Zwischen dem Ausgangsanschluß der Batterie 10 und dem Eingangsanschluß der Recheneinrichtung 14 ist eine erste Spannungsregeleinrichtung 12 angeordnet, die vorzugsweise die ggf. stark schwankende Ausgangsspannung der Batterie 10 auf eine konstante Spannung von etwa 5 Volt herabsetzt. Bei einem Unfall kann die Verbindungsleitung zwischen der Batterie 10 und dem elektronischen Gerät 1 zerstört werden. Um auch in diesem Fall noch eine ausreichend große Energiemenge für den Betrieb des elektronischen Gerätes 1 und für die Aktivierung des Sicherheitssystems 18 bevorraten zu können, ist eine Energiereserve 13, vorzugsweise in Gestalt eines Elektrolytkondensators ausreichend großer Kapazität vorgesehen. Diese Energiereserve 13 ist mit dem Ausgangssanschluß einer zweiten Spannungsregeleinrichtung 11 verbunden, die eingangsseitig mit der Batterie 10 verbunden ist. Vorzugsweise umfaßt die zweite Spannungsregeleinrichtung 11 eine Spannungswandlungseinrichtung, die die Spannung der Batterie 10 auf einen wesentlich höheren Wert, beispielsweise 50 Volt, heraufsetzt. Das elektronische Gerät 1 umfaßt weiter eine Lade- und Entladeeinrichtung 2, R1, R2, S1, S2, die das Laden und Entladen des Kondensators C1 ermöglicht. Dazu ist ein Pol des vorzugsweise einpoligen Schaltmittels S1 einerseits mit Masse und andererseits über die Leitung b2 mit dem freien Anschluß der Zündpille ZP verbunden. Der andere Pol des Schaltmittels S1 ist mit der Verbindungsstelle der Widerstände R1, R2, einem Pol des zweiten Schaltmittels S2 und über die Leitung b1 mit dem freien Anschluß des Kondensators C1 verbunden. Der erste Pol des Schaltmittels S2 ist, wie bereits zuvor erwähnt, einerseits mit dem zweiten Pol des Schaltmittels S1, der Verbindungsstelle der Widerstände R1, R2 und über die Leitung b1 mit dem freien Anschluß des Kondensators C1 verbunden, während sein zweiter Pol mit dem Ausgangsanschluß der Energiereserve 13 verbunden ist. Die Schaltmittel S1, S2 sind mit Ausgangsleitungen der Recheneinrichtung 14 verbunden und von dieser ansteuerbar. Der zweite Anschluß des Widerstands R2 ist mit der Verbindungsleitung zwischen Spannungsregeleinrichtung 12 und Recheneinrichtung 14 verbunden. Der zweite Anschluß des Widerstands R1 ist einem Eingangsanschluß der Recheneinrichtung 14 verbunden.

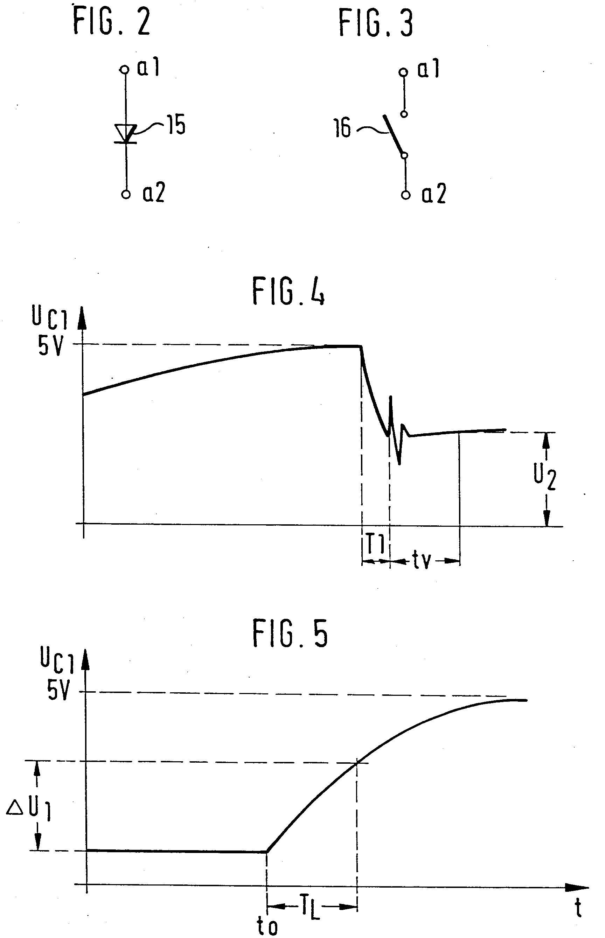

In Figur 2 und Figur 3 sind, jeweils als Schaltungsauszug, weitere Ausführungsbeispiele des elektronischen Gerätes 1 dargestellt. Die in Figur 2 und Figur 3 dargestellten Bauelemente, nämlich Diode 15 nach Figur 2 oder Schaltmittel 16 nach Figur 3, können die in dem Ausführungsbeispiel nach Figur 1 dargestellte Masseverbindung zwischen der Leitung b2 und Masse jeweils ersetzen. Dazu werden die in Figur 2 und Figur 3 dargestellten Bauelemente alternativ mit den Schaltungspunkten a1 und a2 verbunden.

Die Funktion des elektronischen Geräts wird im folgenden auch unter Bezug auf die in Figur 4 und Figur 5 dargestellten Diagramme erläutert.

Zunächst wird die Messung des Widerstands der Zündpille ZP beschrieben. Dazu bleibt das Schaltmittel S1 der Entladeeinrichtung 2 solange geöffnet, bis die Kapazität C1 vollständig aufgeladen ist. Die Messung erfolgt dabei innerhalb eines vorgebbaren Meßrasters. Im Anschluß an die Aufladung wird das Schaltmittel S1 für ein vorgebbares kurzes Zeitintervall, T1, geschlossen. Dieses Zeitintervall T1 beträgt vorzugsweise zwischen 0,5 und etwa 10 Mikrosekunden. Im geschlossenen Zustand des Schaltmittels S1 wird der Kondensator C1 über die einen endlichen ohmschen Widerstand aufweisende Zündpille ZP entladen. Diese Entladung wird so gesteuert, daß die Zündpille ZP weder aktiviert noch geschädigt wird. Dies wird dadurch erreicht, daß der Entladevorgang nur kurze Zeit andauert, so daß demzufolge der Zündpille ZP nur eine vergleichsweise geringe Energiemenge zugeführt wird. Beispielsweise beträgt die bei vollem Ladezustand in dem Kondensator C1 gespeicherte Energiemenge etwa 5,8 Mikrojoule. Da nun aber die für die Aktivierung herkömmlicher Zündpillen notwendige Energiemenge mindestens etwa 10 Millijoule beträgt, liegt der bei dem für die Messung des Zündpillenwiderstandes stattfindende Energiefluß durch die Zündpille etwa um den Faktor 1800 unter diesem für die Zündung notwendigen Wert. Weiterhin kann eine Vorschädigung der Zündpille ZP nicht eintreten, da der Entladestrom des Kondensators C1 durch den Widerstand der Zündpille ZP, sowie dem Innenwiderstand des Schaltmittels S1 auf einen hinreichend niedrigen Wert, beispielsweise 1 bis 2 Ampere, begrenzt wird und die Entladezeit, wie oben schon erwähnt, äußerst kurz gewählt wird. Dadurch werden in der Zündpille ZP niemals kritische Stromdichten erreicht. Nach Ablauf des vorgebbaren Zeitintervalls T1 wird das Schaltmittel S1 wieder geöffnet. Aus dem Diagramm der Figur 4, das die Spannung an dem Kondensator C1 als Funktion der Zeit darstellt, wird ersichtlich, daß nach Ablauf des Zeitintervalls T1 zunächst ein Einschwingvorgang stattfindet, sich dann aber eine vergleichsweise stabile Spannung U2 einstellt. Diese Spannung liegt über den Widerstand R1 an einem Eingangsanschluß der Recheneinrichtung 14 an und kann von dieser ausgewertet werden. Dazu verfügt die Recheneinrichtung 14 zweckmäßig über einen Analog/Digital-Wandler 141, der die analogen Spannungswerte in entsprechende digitale Werte umwandelt, die dann in dem Prozessor 142 der Recheneinrichtung 14 verarbeitet werden. Zweckmäßig wird die an dem Kondensator C1 feststellbare Spannung U2 mit vorgebbaren Werten verglichen. Dabei ergeben sich folgende Möglichkeiten:
1. Die Spannung U2 liegt im zulässigen Bereich; daraus läßt sich schließen, daß der Widerstand der Zündpille ZP ebenfalls im zulässigen Toleranzbereich liegt.
2. Die Spannung U2 ist zu groß; daraus läßt sich ableiten, daß der Widerstand der Zündpille ZP ebenfalls zu groß ist.
3. Die Spannung U2 ist zu klein; daraus läßt sich ableiten, daß der Widerstand der Zündpille ZP ebenfalls zu klein ist.
4. Die Spannung U2 beträgt annähernd 0 Volt; daraus läßt sich ableiten, daß die Zündpille ZP einen Kurzschluß hat.
5. Die Spannung U2 entspricht im wesentlichen der maximalen Ladespannung von etwa 5 Volt; daraus läßt sich ableiten, daß die Zündpille ZP bzw. der Zündkreis eine Unterbrechung aufweist.

Im folgenden wird die Messung der Kapazität des Kondensators C1 beschrieben.

Diese Messung schließt sich bei einer Überprüfung des Zündkreises zweckmäßig unmittelbar an die zuvor beschriebene Messung des Widerstandes der Zündpille ZP an. Zunächst werde angenommen, daß das Schaltmittel S1 der Entladestufe eine bestimmte vorgebbare Zeit geschlossen war, so daß der Kondensator C1 vollständig, mindestens aber teilweise entladen worden ist. Nun wird das Schaltmittel S1 geöffnet (Zeitpunkt to in Figur 1). Der Kondensator C1 kann sich dadurch über den Widerstand R2, die Zündpille ZP über die Masseanbindung oder deren Ersatz nach Figur 2 bzw. Figur 3 mit geschlossenem Schaltmittel S16 aufladen. Da der Widerstand R2, vermehrt um parasitäre Widerstände, wie beispielsweise die Widerstände der Leitungsbahnen, usw. um einen Faktor von ca. 500 - 2000 mal größer ist als der Widerstand der Zündpille ZP, ist die Ladezeit des Kondensators C1 im wesentlichen unabhängig vom Widerstand der Zündpille ZP bzw. den vorerwähnten parasitären Widerständen. Die Ladezeit hängt daher im wesentlichen nur von der Kapazität des Kondensators C1 ab. Nach einer vorgebbaren Ladezeit TL (Figur 5) wird daher die an dem Kondensator C1 aufgetretene Spannungsänderung U1 gemessen. Die Messung erfolgt wiederum, wie oben schon beschrieben, mit Hilfe der Recheneinrichtung 14, der die an dem Kondensator C1 anliegenden Spannungen über den Widerstand R1 zugeführt bekommt. Die gemessene Spannungsänderung steht nun in direktem Zusammenhang mit der Kapazität des Kondensators C1. Es ergeben sich dabei folgende Möglichkeiten:
1. Die Spannungsänderung U1 liegt im Toleranzbereich; daraus läßt sich schließen, daß die Kapazität des Kondensators C1 ebenfalls im zulässigen Bereich liegt.
2. Die Spannungsänderung U1 ist zu groß; daraus ergibt sich, daß die Kapazität des Kondensators C1 zu klein ist.
3. Die Spannungsänderung U1 ist zu klein; daraus ergibt sich, daß die Kapazität des Kondensators C1 zu groß ist.
4. Die Spannungsänderung U1 beträgt nahezu 0 Volt; daraus ergibt sich, daß der Kondensator C1 einen Kurzschluß aufweist.
5. Die Spannungsänderung U1 beträgt nahezu 5 Volt (maximale Ladespannung); daraus ergibt sich, daß in dem den Kondensator C1 umfaßenden Zündkreis eine Unterbrechung vorliegt.

Insbesondere die Lade- und Entladeschaltung des elektronischen Gerätes 1 zeichnet sich durch einen besonders einfachen und preisgünstigen Aufbau aus. Dennoch ist eine vergleichsweise große Meßgenauigkeit erreichbar, die einen zuverlässigen Schluß auf den Zustand der Zündpille ZP und des Kondensators C1 zuläßt. Die Meßgenauigkeit der Widerstandsmessung der Zündpille Zp kann weiter verbessert werden, wenn das Ergebnis der Kapazitätsmessung für C1 im Rechenalgorithmus der Recheneinheit 14 mitberücksichtigt wird. Zwar ist es schon bekannt, für die Aktivierung von Sicherheitssystemen vorgesehene Zündpillen, die nicht mit einem Kondensator in Serie geschaltet sind, vermittels eines Prüfstroms auf Funktionsfähigkeit zu überprüfen. Dabei wird beispielsweise der Spannungsabfall über der Zündpille gemessen, wenn durch sie ein Konstantstrom von etwa 20 Milliampere fließt. Dabei ergibt sich ein Spannungsabfall von nur etwa 40 Millivolt, der insbesondere bei den rauhen Umgebungsbedingungen in einem Kraftfahrzeug nur außerordentlich schwer zu messen ist. Vor allem ist bei dieser bekannten Anordnung die Feststellung des Kurzschlußfalls nur außerordentlich schwer möglich. Bei dem erfindungsgemäß vorgeschlagenen elektronischen Gerät ist dagegen die Feststellung eines Fehlers wesentlich einfacher. Denn die Entladung des Kondensators C1 erfolgt mit einem Strom von etwa 1 bis 2 Ampere. Störeinflüsse sind dabei praktisch zu vernachlässigen, da sie nicht die Energie haben, um derart hohe Stromstärken zu beeinflussen. Nach der Entladung des Kondensators C1 über die Zündpille ZP mit einem Nennwiderstand von ca. 2 Ohm beträgt die verbleibende Restspannung noch ca. 1,5 Volt, die über eine vergleichsweise niedrige Impedanz an Masse gebunden ist. Diese entspricht einer Spannungsänderung während des Meßvorgangs in der Größenordnung von ca. 3,5 Volt im Vergleich zu ca. 40 Millivolt bei herkömmlichen Meßverfahren. Der Störabstand ist daher mindestens um den Faktor 90 verbessert.

Die Kapazitätsmessung für C1 des RC-Zündelementes in Figur 1 arbeitet mit dem aus herkömmlichen Systemen mit R-Zündelement bekannten Meß-Stromniveau im mA Bereich. Ist aber aufgrund des hardwaremäßig integralen Meßprinzips (Tiefpaß aus Zündkreiskondensator C1 und Widerstand R2), sowie der relativ großen Meßspannungsänderung nach Figur 5 0,5 - 2,5 Volt sehr stabil.

## Patentansprüche

1. Elektronisches Gerät für die Ansteuerung eines Sicherheitssystems für Fahrzeuginsassen, wobei das Sicherheitssystem mindestens einen Zündkreis und dieser Zündkreis mindestens eine in Serie zu einem Kondensator geschaltete Zündpille umfaßt, mit einer Lade- und Entladeeinrichtung für den Kondensator und mit einer Meßeinrichtung für die an der Zündpille anliegende Spannung.

2. Elektronisches Gerät nach Anspruch 1, dadurch gekennzeichnet, daß die Lade- und Entladeeinrichtung (2) Schaltmittel (S1, S2) umfaßt.

3. Elektronisches Gerät nach einem der Ansprüche 1, 2, dadurch gekennzeichnet, daß das Gerät Mittel für die Festlegung einer vorgebbaren Entlade- bzw. Ladezeit (T1, TL) für den Kondensator (C1) umfaßt.

4. Elektronisches Gerät nach einem der Ansprüche 1 bis 3, dadurch gekennzeichnet, daß die Entladezeit im Meßbetrieb (T1) etwa 0,5 bis 10 Mikrosekunden beträgt.

5. Elektronisches Gerät nach einem der Ansprüche 1 bis 4, dadurch gekennzeichnet, daß die Entladezeit im Meßbetrieb (T1) (Figur 5) 50 bis 1000 Mikrosekunden beträgt.

6. Elektronisches Gerät nach einem der Ansprüche 1 bis 5, dadurch gekennzeichnet, daß die Lade- und Entladeeinrichtung (2) zu Meßzwecken des R-C-Zündelementes einen Widerstand (Meßladekreis R2) an niedriger Versorgungsspannung z. B. sv umfaßt (Meßladekreis).

7. Elektronisches Gerät nach einem der Ansprüche 1 bis 6, dadurch gekennzeichnet, daß die Lade- und Entladeeinrichtung (2) (in Figur 1 das Schaltemelemt S1) sowohl zur Ansteuerung eines Sicherheitssystems als auch zur Prüfung des R-C-Zündelementes im Meßfall (Mehrfachnutzung) dienen.
